# EUROPEAN PATENT APPLICATION

(11) **EP 3 823 397 A1**
(43) Date of publication of application: **19.05.2021**
(21) Application number: 20203473.2
(22) Date of filing: 23.10.2020
(51) Int. Cl.: H04W 72/12

(54) **TRAFFIC-DEPENDENT TRANSMISSION FOR INTERFERENCE REDUCTION**

(30) Priority: 15.11.2019 US 201962935978 P
(71) Applicant: Nokia Technologies Oy, 02610 Espoo (FI)
(72) Inventor: KUO, Ping-Heng, London, NW71GX (GB); LI, Zexian, 02610 Espoo (FI)
(74) Representative: Nokia EPO representatives

(57) **Abstract**

Systems, methods, apparatuses, and computer program products for traffic-dependent transmission for interference reduction. For example, some embodiments described herein may provide for a user equipment (UE) (e.g., an aggressor UE (A-UE)) that can adapt operations for transmission in a resource where a signal transmission from the UE causes interference to a signal reception by another UE (e.g., a victim UE (V-UE)) based on traffic the UE is to transmit.

## Description

### FIELD:

Some example embodiments may generally relate to mobile or wireless telecommunication systems, such as Long Term Evolution (LTE) or fifth generation (5G) radio access technology or new radio (NR) access technology, or other communications systems. For example, certain embodiments may relate to systems and/or methods for traffic-dependent transmission for interference reduction.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. 5G is mostly built on a new radio (NR), but a 5G (or NG) network can also build on E-UTRA radio. It is estimated that NR may provide bitrates on the order of 10-20 Gbit/s or higher, and may support at least enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. It is noted that, in 5G, the nodes that can provide radio access functionality to a user equipment (i.e., similar to Node B in UTRAN or eNB in LTE) may be named gNB when built on NR radio and may be named NG-eNB when built on E-UTRA radio.

### BRIEF DESCRIPTION

According some aspects, there is provided the subject matter of the independent claims. Some further aspects are defined in the dependent claims. The embodiments that do not fall under the scope of the claims are to be interpreted as examples useful for understanding the disclosure.

### BRIEF DESCRIPTION OF THE DRAWINGS:

For proper understanding of example embodiments, reference should be made to the accompanying drawings, wherein:
Fig. 1 illustrates an example signal diagram of traffic-dependent transmission for interference reduction, according to some embodiments;
Fig. 2 illustrates an example flow diagram of operations of a network node, according to some embodiments;
Fig. 3 illustrates an example flow diagram of conditional transmission opportunity skipping by a user equipment (UE), according to some embodiments;
Fig. 4 illustrates an example flow diagram of per-grant skipping by a UE, according to some embodiments;
Fig. 5 illustrates an example flow diagram of narrowed logical channel prioritization (LCP) by a UE, according to some embodiments;
Fig. 6 illustrates an example flow diagram of a method, according to some embodiments;
Fig. 7 illustrates an example flow diagram of a method, according to some embodiments;
Fig. 8a illustrates an example block diagram of an apparatus, according to an embodiment; and
Fig. 8b illustrates an example block diagram of an apparatus, according to another embodiment.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for traffic-dependent transmission for interference reduction is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments.

Additionally, if desired, the different functions or operations discussed below may be performed in a different order and/or concurrently with each other. Furthermore, if desired, one or more of the described functions or operations may be optional or may be combined. As such, the following description should be considered as merely illustrative of the principles and teachings of certain example embodiments, and not in limitation thereof.

One objective of 5G may include handling traffic with very high reliability and stringent latency requirements, such as URLLC, and time-sensitive communications (TSC) that may be used for factory automation in industrial IoT (IIoT) scenarios. This type of traffic may also be anticipated in applications such as vehicle-to-everything (V2X) applications for autonomous driving. In addition to this delay-sensitive traffic, conventional types of traffic, such as eMBB, may also be present. In particular, due to the diverse applications that may be running on a UE simultaneously, a UE may have to process (e.g., transmit and/or receive) both delay sensitive traffic (e.g., URLLC traffic) and non-delay sensitive traffic (e.g., eMBB traffic) in parallel.

In order to facilitate scheduling flexibility, 5G NR may support dynamic time-division duplex (TDD) configurations, where uplink and downlink opportunities can be dynamically assigned within a slot. Such a feature, however, may result in severe cross-link interference (CLI) when two neighboring cells or UEs have different transmission directions (e.g., downlink (DL) and uplink (UL), or opposite sidelink directions).

Therefore, there is a need for CLI mitigation in order to improve throughput and reliability.

In a typical CLI scenario, where an uplink transmission from a UE (e.g., an aggressor UE, referred to herein as an "UE-A" or an "A-UE") may cause CLI to corrupt downlink signal targeting at another UE (e.g., a victim UE, referred to herein as an "UE-V" or a "V-UE"). The level of such UE-to-UE CLI may be high and may have a significant impact on the performance of communications of the UEs, such as when the two UEs are physically close to each other while being served by different network nodes (e.g., gNBs, transmit receive points (TRPs), and/or the like).

Some CLI measurement and/or reporting mechanisms focus on how CLI should be measured (e.g., measurement resource definition and configuration) and reported, as well as information to be exchanged between two network nodes (e.g., base stations) via an Xn interface, for example, for the purposes of CLI mitigation or avoidance (e.g., the intended UL/DL configuration of each base station). In general, CLI information may enable a network to carry out smart scheduling (e.g., avoid scheduling UEs on resources that have CLI), and/or triggering network coordination to reduce or eliminate the impacts of CLI. For instance, transmission from an A-UE may be suppressed in certain resources to reduce CLI. With the background descried above, considering mixed traffic types in 5G networks and interferences caused by system dynamicity, there is a need for how to handle critical traffic (e.g., URLLC traffic) with considerations for interference. For instance, interference management for URLLC in a mixed URLLC/eMBB network may be considered as one URLLC/IIoT-related enhancement.

As described above, CLI may be measured and reported to the network, and network coordination aiming to reduce impacts of CLI may be triggered. In a CLI scenario, where different TDD configurations may be used by an aggressor network node (e.g., an A-gNB or a gNB-A) and a victim network node (e.g., a V-gNB or a gNB-V) for associated UEs. By exchanging information, such as CLI measurement results and their intended TDD configurations, the aggressor network node (e.g., the A-gNB) may identify the resources (e.g., time interval, frequency blocks) in which its associated UEs (e.g., A-UEs) would generate significant interference that may potentially corrupt signal reception by a V-UE. These resources may be CLI time intervals that represent the slots configured as UL for an A-UE and DL for a V-UE.

As the aggressor network node may derive, via coordination with the victim network node, the resources where the interference from the A-UE can be particularly harmful for the V-UE, one possible solution to the CLI may include avoiding scheduling uplink/sidelink transmission opportunities (e.g., uplink grants) in the identified resource where the CLI is anticipated to occur. However, there could be transmission occasions of active configured grant(s) that are allocated even before CLI resource identification, in which the A-UE may still transmit data in the CLI resource, thereby creating certain interference. Moreover, deactivating the configured grant (or avoiding scheduling) in the CLI resource may result in unacceptable latency for certain traffic with more strict delay requirements, since, in some cases, the configured grants may be activated primarily for URLLC traffic. As a result, this creates a conflict for the network between minimizing CLI and ensuring a particular quality of service (QoS) of traffic from the A-UE. This may result in the problem of how to reduce or eliminate CLI generated by an A-UE without negatively impacting a QoS of delay-sensitive traffic originated from the A-UE.

Some possible attempts at solving this problem have involved dedicating particular types of cells (e.g., macro cells, small cells, etc.) to specific types of services, have addressed dynamic traffic that does not have strict timing requirements (and has not addressed delay-critical traffic from an A-UE in uplink or sidelink directions), and/or have introduced various information elements (IEs) for exchanging information over Xn and/or F1 interfaces. As such, none of these possible solutions provide for interference coordination that takes QoS needs of different traffic and/or service types into account.

Some embodiments described herein may provide for a UE (e.g., an A-UE) that can adapt operations for transmission in a resource where a signal transmission from the UE causes interference to a signal reception by another UE (e.g., a V-UE) based on traffic the UE is to transmit. For example, a CLI resource may include a resource where CLI generated by an A-UE is potentially high for certain V-UEs. In this case, the A-UE may modify its operations based on the traffic that the A-UE is scheduled to transmit, which is causing the CLI. In this way, some embodiments described herein reduce or eliminate interference (e.g., CLI) caused in a resource. This improves communications of devices in a network, conserves processing and/or computing resources that would otherwise be consumed due to correcting for, for example, dropped communications, conserves network resources (e.g., bandwidth) that would otherwise be consumed due to retransmissions, and/or the like. In some embodiment, an aggressor network node (e.g., an A-gNB) may instruct the A-UE to not transmit in the identified CLI resource, or to otherwise modify operations, to reduce or eliminate interference generation, unless the A-UE is to transmit high priority traffic in the CLI resources. The aggressor network node may determine the traffic that can be allowed to be transmitted via coordination with a victim network node, as described elsewhere herein. Although some embodiments described herein may be described in the context of CLI, CLI is used as one example and certain embodiments described herein can be extended to be used in other scenarios, such as overlay and/or underlay sidelink.

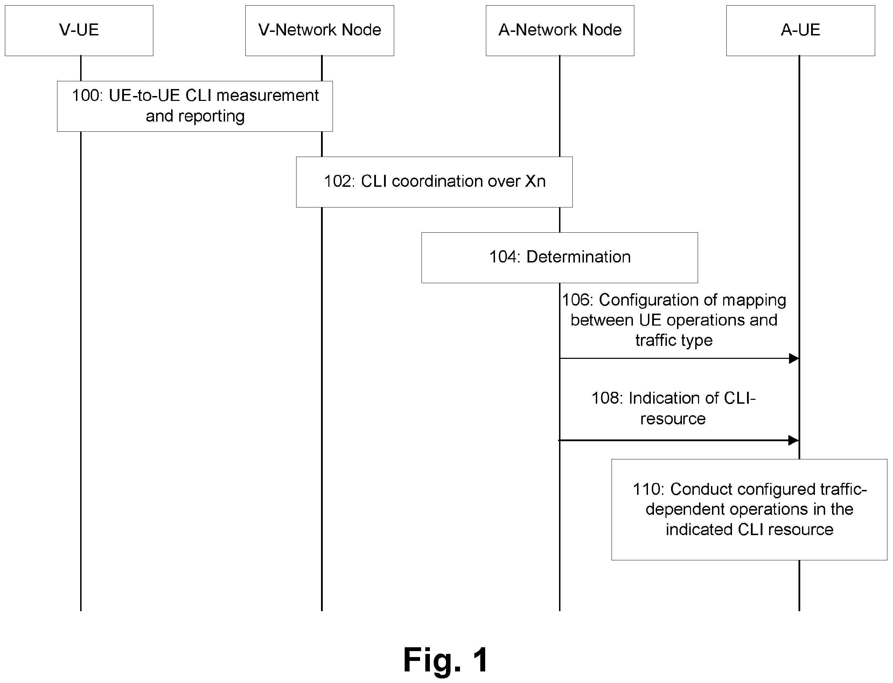

Fig. 1 illustrates an example signal diagram of traffic-dependent transmission for interference reduction, according to some embodiments. As illustrated, Fig. 1 includes a V-UE, a victim network node (shown as a "V-Network Node"), an aggressor network node (shown as an "A-Network Node"), and an A-UE.

As illustrated in Fig. 1, at 100, the V-network node and the V-UE may perform UE-to-UE CLI measurement and reporting, such as to measure and/or report the UE-to-UE CLI. For example, the V-UE may measure UE-to-UE CLI between the A-UE and the V-UE, and may report the CLI to the V-network node.

As further illustrated in Fig. 1, at 102, the V-network node and the A-network node may perform CLI coordination over an interface (e.g., an Xn interface. In this operation, the A-network node may acquire the following information from the V-network node (based on network coordination): a resource (e.g., in time, frequency, space, and/or code, such as indices of physical resource blocks (PRBs) and/or transmission time intervals (TTIs)) in which the V-UE may be impacted by the CLI to be generated by the A-UE (which may be referred to as a "CLI resource" herein) and information relating to traffic types (e.g., QoS, logical channel (LCH) priority, and/or the like) that the V-network node may transmit to the V-UE in the CLI resource.

As further illustrated in Fig. 1, at 104, the A-network node may perform a determination. Based on the acquired information, the A-network node may determine a mapping between operations that the A-UE may conduct when processing transmission opportunities (either for uplink or sidelink communications as example(s)) in the identified CLI resource, and the traffic the A-UE is to transmit.

As further illustrated in Fig. 1, at 106, the A-network node may perform a configuration of a mapping between UE operations and traffic type to the A-UE. In addition, at 108, the A-network node may transmit an indication of the CLI resource to the A-UE. For example, the A-network node may configure the determined mapping to the A-UE, and may indicate the potential CLI resource (e.g., in time, frequency, space, and/or code, such as indices of PRBs and/or TTIs). As further illustrated in Fig. 1, at 110, the A-UE may conduct configured traffic-dependent operations in the indicated CLI resource. For example, the A-UE may processes the transmission opportunities (e.g., configured grant occasions) in the following manner: if the transmission opportunity is not in the CLI-resource, then the UE may use the transmission opportunity for uplink/sidelink transmissions, or if the transmission opportunity is overlapping with the CLI-resource, then the UE may use the transmission opportunity with an operation that depends on the traffic it is to transmit using such transmission opportunity (based on the mapping configured by the A-network node).

The transmission opportunities may include both a data channel (e.g., physical uplink shared channel (PUSCH)) and a control channel (e.g., physical uplink control channel (PUCCH)). The traffic types may be represented by a logical channel index, a logical channel priority, a logical channel prioritization (LCP) parameter (e.g., a prioritized bit rate (PBR), a bucket size duration (BSD), and/or the like), a quality of service (QoS) flow identifier (QFI), a data radio bearer (DRB) identifier, a type of radio bearer (e.g., a Signal Radio Bearer (SRB), a Data Radio Bearer (DRB), and/or the like), a quality of service (QoS) identifier (e.g., a 5G QoS identifier (5QI), a PC5/slidelink QoS identifier (PQI), and/or the like), a quality of service (QoS)-related parameter (e.g., packet delay budget (PDB), reliability, latency, and/or the like), a cast-type (e.g., unicast, multicast, and/or the like), a transmission direction (e.g., uplink, sidelink, downlink, relay link, and/or the like), a buffering time or delivery time budget of traffic, and/or the like.

The possible UE operations toward a transmission opportunity in a CLI resource may include skipping the transmission opportunity, where, for example, data is kept in a queue of a buffer and is held for a later transmission opportunity or, if a medium access control (MAC) protocol data unit (PDU) is already generated, then the data may be stored in a hybrid automatic repeat request (HARQ) buffer and held until a later re-transmission opportunity. Additionally, or alternatively, the UE operations may include using the transmission opportunity with nominal parameters (e.g., as indicated in the grant). Additionally, or alternatively, the UE operations may include using the transmission opportunity with alternative parameters (e.g., different power control parameters, different MCS, and/or the like). Additionally, or alternatively, the UE operations may include modifying an LCH mapping restriction (e.g., LCH mapping restrictions may be configured for each LCH, which may indicate that the data from the LCH can be mapped to grants satisfying specific criteria, such as a threshold PUSCH duration of the grant, and modifying such restrictions means the mapping criteria is changed temporarily during a CLI resource). Other operations are possible and the previously described operations are provided merely as examples.

As used herein, a configured grant may include an uplink resource that is available in a periodic manner, the occasions of which appear periodically once configured and activated. A configured grant may be configured and activated by a network node previously and may still be valid in a subsequent CLI-resource. A dynamic grant may include an opportunity that does not appear periodically. A configured grant may provide shorter latency, as there may not be a need for signaling to request uplink resources due to its periodic availability. A UE may process a transmission opportunity (associated with either a configured grant or a dynamic grant) by determining what data should be allocated to this uplink/sidelink resource (e.g., by performing logical channel prioritization (LCP) procedures in medium access control (MAC)), and then delivering the data to a physical layer (PHY) for transmission. Resources allocated in a similar way as for a configured grant can be used for sidelink communication as well.

Table 1 illustrates an example mapping between UE operations and traffic for transmission opportunities in the CLI resource. Table 1 assumes, for example, two LCH priority thresholds, P1 and P2 (where P2>P1), which may be configured by the A-network node or may be pre-defined. The LCH priority thresholds may be configured via radio resource control (RRC) operations. When receiving a grant, the MAC may map data from different LCHs to a resource of the grant in an order that may be based on the LCHs respective configured priority levels (e.g., using LCP operations).

**Table 1:**

| LCH with a particular priority (e.g., highest priority) may have data in buffer, x | UE operations for transmission opportunities in a CLI resource |
|---|---|
| x < P1 | Skip the transmission opportunities |
| P1 ≤ x <P2 | Transmit with alternative parameters |
| x ≥ P2 | Transmit with nominal parameters |

In addition to, or alternatively to, traffic-dependent operations, the network may configure the UE operations in a grant-dependent manner. For example, among the multiple grants that may be available for the A-UE in the CLI resource, the A-network node may pre-configure whether each grant should be skipped, or used differently (e.g., with alternative parameters), when it is in the CLI resource.

As described above, Fig. 1 is provided as an example. Other examples are possible, according to some embodiments.

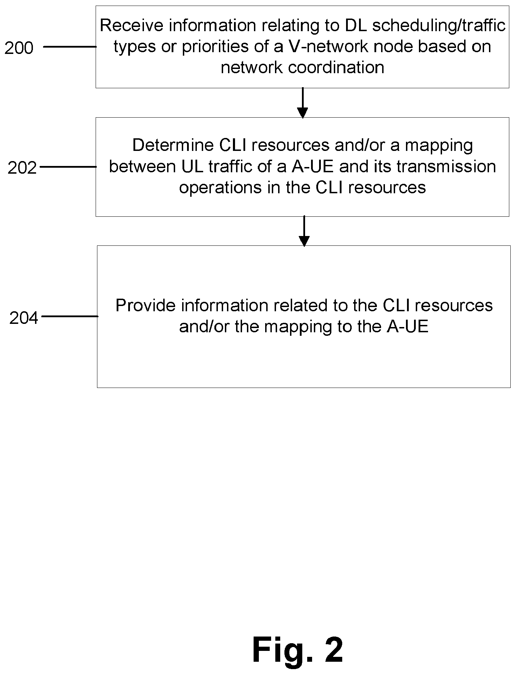

Fig. 2 illustrates an example flow diagram of operations of a network node, according to some embodiments. For example, Fig. 2 illustrates a method of an A-network node, according to some embodiments.

As illustrated in Fig. 2, at 200, the method may include receiving information relating to DL scheduling/traffic types or priorities of a V-network node based on network coordination. The proposed method may use dynamic or semi-dynamic network coordination between an A-network node and a V-network node. In particular, the A-network node may dynamically acquire and/or update (or derive by itself based on messages from the V-network node) the following information: potential CLI resources (one or more resources (e.g., certain frequency resource blocks in a certain set of subsequent slots) where a V-UE is likely to be impacted by CLI to be generated by an A-UE) and the traffic types or priorities of the traffic that the V-network node intends to transmit to the V-UE in these radio resources.

The potential CLI resources may be derived by the A-network node based on a misalignment of directions of transmission to be scheduled by the A-network node and the V-network node during a subsequent time interval. In particular, assuming the V-network node provides its intended TDD configuration to the A-network node over the Xn interface, then the A-network node may compare the TDD configurations to be applied at the two network nodes, and the TTIs, such as slots/orthogonal frequency-division multiplexing (OFDM) symbols with different transmission directions (e.g., UL/DL), can be treated as a potential CLI interval. For each subsequent TTI, the A-network node may determine if it is a potential CLI resource depending on whether the transmission direction is different to the V-network node. For example, two slots may be identified as the potential CLI intervals because the transmission directions are different for the A-network node (e.g., uplink) and the V-network node (e.g., downlink). In some cases, as the A-network node may determine the CLI to be generated by its associated UE (e.g., the A-UE), it may look at the uplink slots in its TDD configuration to check which of these uplink intervals have different transmission directions compared to the V-network node. The indications of the derived potential CLI resources may be provided to the A-UE as well.

As described above, the V-network node may also provide the information relating to the types or priorities of traffic it may serve over a certain subsequent time interval, so that the A-network node may derive what types or priorities of traffic from the V-network node may be impacted by the uplink/sidelink signals from the A-UE. Based on such information, as further illustrated in Fig. 2, at 202, the method may include determining CLI resources and/or a mapping between UL traffic of an A-UE and its transmission operations in the CLI resources. For example, the A-network node may determine a mapping between uplink traffic types or priorities that the A-UE may transmit (e.g., in uplink or in sidelink in case sidelink transmissions are using UL resources) and the A-UE's transmission operations in the CLI resources, in order for the QoS of both network nodes to be fulfilled.

As further illustrated in Fig. 2, at 204, the method may include providing information related to the CLI resources and/or the mapping to the A-UE. For example, if the downlink traffic from the V-network node is low priority (e.g., eMBB traffic), then the A-network node may configure the A-UE with an operation such that the A-UE can perform uplink directly without concerning CLI generation from its transmission. Conversely, if the downlink traffic from the V-network node is high priority (e.g., URLLC traffic), then the A-network node may configure the A-UE with an operation such that the A-UE can perform uplink if it is also processing traffic with comparable importance, otherwise the transmission opportunities in the CLI resources may be skipped. The mapping may be pre-configured and updated dynamically. In addition, the A-network node may also (e.g., dynamically) indicate the CLI resources to the A-UE.

As indicated above, Fig. 2 is provided as an example. Other examples are possible, according to some embodiments.

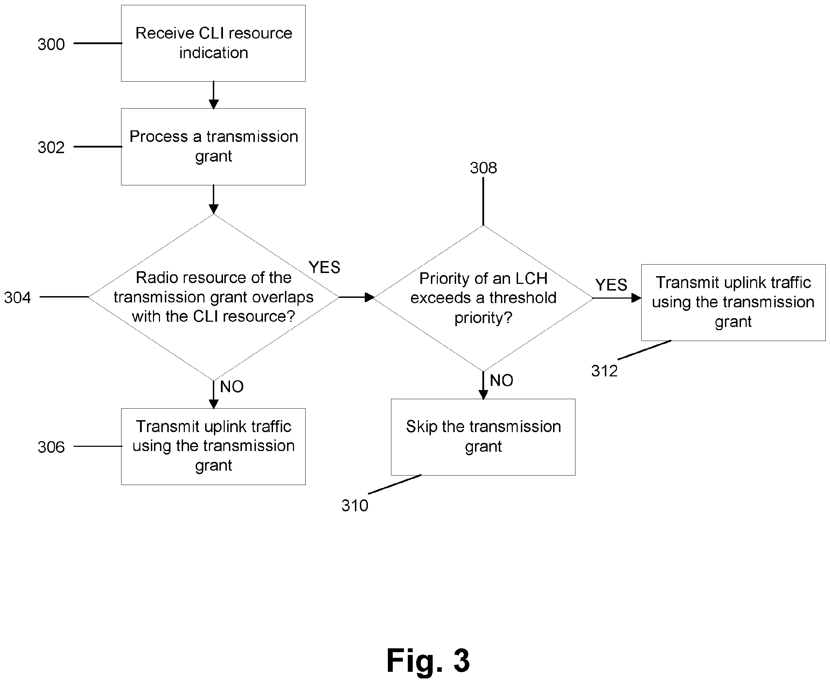

Fig. 3 illustrates an example flow diagram of conditional transmission opportunity skipping by a user equipment (UE), according to some embodiments. For example, Fig. 3 illustrates a method performed by an A-UE, according to some embodiments (e.g., in cases of full or partial overlap between a radio resource and a CLI resource).

As illustrated in Fig. 3, at 300, the method may include receiving a CLI resource indication. As further illustrated in Fig. 3, at 302, the method may include processing a transmission grant. As further illustrated in Fig. 3, at 304, the method may include determining if a radio resource of the transmission grant overlaps with a CLI resource. As further illustrated in Fig. 3, if it is determined that the radio resource does not overlap with the CLI resource (304-NO), then the method may include, at 306, transmitting uplink traffic using the transmission grant (e.g., in a normal manner without using modified operations). As further illustrated in Fig. 3, if it is determined that the radio resource overlaps with the CLI resource (304-YES), then the method may include, at 308, determining whether a priority of an LCH exceeds a threshold priority. As further illustrated in Fig. 3, if the priority of the LCH does not exceed the threshold priority (308-NO), then the method may include, at 310, skipping the transmission grant. As further illustrated in Fig. 3, if the priority of the LCH exceeds the threshold priority (308-YES), then the method may include, at 312, transmitting uplink traffic using the transmission grant.

In this example embodiment, the A-UE may be configured to either skip the transmission opportunity in the CLI resource, or use the transmission opportunity in the CLI resource, based on the priority of an LCH that has data in a buffer (e.g., based on the highest priority LCH). More specifically, the A-UE may skip uplink/sidelink grants (including configured grants and dynamic grants) that have a resource in the CLI resources, unless the A-UE has data buffered in LCHs (or a specific subset of logical channels) with a priority higher than the priority threshold, P and which can be mapped to these uplink grants.

The A-UE operations may be applicable to a transmission opportunity of a Msg A in a 2-step random access channel (RACH) procedure. Additionally, or alternatively, the A-UE operations may be applicable to transmission of uplink reference signals (e.g., sounding reference signals (SRSs)), and may depend on the configuration of such reference signal (e.g., whether the SRS is periodic or aperiodic, and what is the periodicity of the SRS configuration). Additionally, or alternatively, the A-UE operations may be applicable to uplink signals for purposes of random access procedures (e.g., physical RACH (PRACH) procedures), and may depend on the random access code sequence to be used by the A-UE, as well as the event triggering random access (e.g., if the random access is triggered by a handover, or if the random access is triggered by intentions of transmitting high priority traffic). Additionally, or alternatively, the A-UE operations may be applicable to MAC control elements (CEs) that the A-UE intends to transmit. For instance, if the A-UE intends to transmit a buffer status report (BSR) relating to logical channel groups (LCGs) comprising LCHs with a priority higher than P.

In some embodiments, the transmission opportunity may be applicable to a control channel. For example, the A-UE may skip scheduling request (SR) PUCCH (SR-PUCCH) opportunities in the indicated CLI resource, unless the SR is triggered by LCHs (or a specific subset of LCHs) with a priority higher than P. In some embodiments, some of the SR-PUCCHs may be subject to skipping, for example, SR-PUCCHs associated with certain SR configurations, or SR-PUCCHs associated with certain SR configurations with a periodicity lower or higher than a threshold. An SR configuration may correspond to a periodic PUCCH resource dedicated to SR signalling. Each LCH may be mapped to a SR configuration, so that when an SR of an LCH is triggered, the A-UE may determine what PUCCH resource can be used to transmit the SR. As a result, A-UE operations may be determined based on the SR configuration where the SR-PUCCH is applicable. In some embodiments, the handling of a PUCCH-beam failure rate (PUCCH-BFR) can be implemented in the same, or a similar, way as SR.

In some embodiments, the A-UE may skip one or more HARQ ACK/NACK transmissions in the indicated CLI resource, unless the transmissions are associated with a high priority physical downlink shared channel (PDSCH) or the priority indication for HARQ ACK/NACK from the A-network node is high, or otherwise satisfies a threshold. In some embodiments, the A-UE may skip PUCCH for channel state information (CSI) reporting in the CLI resource.

The threshold priority level P described herein may be configured by the network (e.g., the A-network node), the value of which may be dynamically updated (e.g., based on signalling of a MAC CE), depending on the traffic that the V-network node intends to transmit in the downlink.

Instead of performing a binary decision between skipping and transmission as illustrated in Fig. 2, other options may be provided. For example, the A-UE may choose to use the transmission grants by using a set of parameters that may associated with achieving lower interference (e.g., lower transmission power), depending on the traffic it is to transmit. In particular, two logical channel priority levels, P1 and P2, may be set and the following rules may be defined for grants in the indicated CLI resource. As a first example of a rule, if the highest priority of LCH that has buffered data is lower than P1, the A-UE may skip the grant and may not perform a transmission. As a second example of a rule, if the highest priority of LCH that has buffered data is equal to or higher than P1, but lower than P2, the A-UE may use the grant but with low-interference transmission parameters. For example, lower transmit (TX) power, reduced diversity order, reduced rank, reduced transport block (TB) size (e.g., to keep the similar receive (RX) performance at the network node) or a decrease in the number of repetitions, or changing to a suboptimal beam and/or the like. As a third example of a rule, if the highest priority of LCH that has buffered data is equal to or higher than P2, then the A-UE may use the grant with nominal transmission parameters configured for the grant and may conduct a transmission using normal operations.

For certain embodiments that include transmission skipping or transmission altering, apart from traffic-related criteria such as LCH priority, how the UE is to operate for these transmission opportunities in the potential CLI resource may also be decided after the MAC PDU is generated by the A-UE for such transmission opportunities, and the A-UE operations may be determined based on the content of the generated MAC PDU.

For instance, whether the A-UE is to skip or alter the transmission may depend on one or more factors. For example, a factor may include whether the generated MAC PDU contains any MAC SDU for at least one signalling radio bearer (SRB). Additionally, or alternatively, a factor may include whether the generated MAC PDU contains any MAC service data unit (SDU) for at least one data radio bearer (DRB) with activated packet data convergence protocol (PDCP) duplication. Additionally, or alternatively, a factor may include whether the generated MAC PDU contains any certain types of MAC CEs, or MAC CEs relating to certain traffic (e.g., BSR for certain LCGs). Additionally, or alternatively, a factor may include whether the lowest or highest (or other threshold) channel access priority class (CAPC) (e.g., which determines listen-before-talk (LBT) parameters that the UE may use when trying to access unlicensed bands for transmission of data, determination of which may be configured by a network node) of the generated MAC PDU is lower or higher than a threshold. Additionally, or alternatively, a factor may include whether a HARQ process identifier of this generated MAC PDU is in a set of pre-configured HARQ processes. Additionally, or alternatively, a factor may include whether the PUSCH for this generated MAC PDU is further multiplexed with some uplink control information (UCI) (e.g., HARQ-ACK/NACK or CSI), and may depend on the type and/or priority of the multiplexed UCI.

As described above, Fig. 3 is provided as an example. Other examples are possible, according to some embodiments.

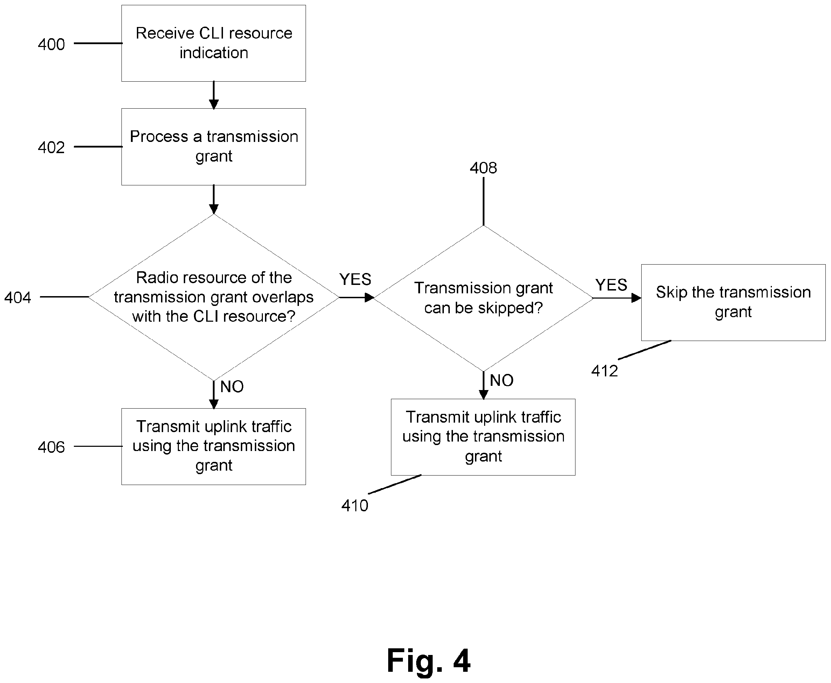

Fig. 4 illustrates example flow diagram of per-grant skipping by a UE, according to some embodiments. For example, Fig. 4 illustrates an example method performed by an A-UE.

Operations 400, 402, 404, and 406, illustrated in Fig. 4, may be the same as or similar to operations 300, 302, 304, and 306, respectively, described above. As further illustrated in Fig. 4, if the A-UE determines that a radio resource of the transmission grant overlaps with the CLI resource (404-NO), then the method may include, at 408, determining whether the transmission grant can be skipped. As further illustrated in Fig. 4, if the A-UE determines that the transmission grant cannot be skipped (408-NO), then the method may include, at 410, transmitting uplink traffic using the transmission grant. As further illustrated in Fig. 4, if the A-UE determines that the transmission grant can be skipped (408-YES), then the method may include, at 412, skipping the transmission grant.

In this embodiment, the A-network node may configure or indicate, for each grant, whether the grant can be skipped if it overlaps with the indicated CLI resource. For instance, one or more configured grants may be configured per UE per bandwidth part (BWP). In the configuration of each configured grant, an IE (e.g., 1-bit) may be included to indicate whether the occasions of this configured grant may be skipped if it overlaps with the CLI resource. Such indication may be the same as the grant priority indicator used for intra-UE prioritization. Once CLI resources are indicated, the UE can determine if it may skip the occasions of a configured grant in the indicated CLI resource, based on the proposed IE in the CG configurations. Alternatively, the UE may determine if the configured grant may be skipped based on pre-configured LCH mapping restrictions. That is, if the configured grant is associated with one or more LCHs with a priority higher than P, and if any LCHs (priority higher than P) that are allowed to use this grant have data in the buffer, then the A-UE may not skip this grant even if it is in the CLI resource. Otherwise, the UE may skip the grant in the CLI resource.

Some grants may be configured to alter their parameters if its occasion overlaps with the CLI resource. For example, the UE may still use the grant in the CLI resource but the TX power may be reduced to a lower level in order to decrease interference.

Thus, some embodiments described herein provide for a UE to determine whether it may skip a grant in the CLI resource, based on whether the grant occasion has a particular indication. Such indication of a grant may be implemented in an implicit manner (rather than via an explicit indication). It may be indicated based on the value of any parameters relating to this grant. For instance, the network node may configure a threshold modulation/coding scheme (MCS), and any grants with an MCS higher or lower than the configured threshold can be skipped if it is in the potential CLI resource. Other grant parameters may include downlink control information (DCI) format, HARQ-related information (e.g., HARQ process identifier), configured grant configuration index, periodicity of the configured grant configuration, numerology, reference signals setting (e.g., demodulation reference signal (DMRS)-related parameters), multiple input, multiple output (MIMO)-related parameters, number of repetitions, radio network temporary identifier (RNTI) and/or the like. Additionally, or alternatively, the indication may be implied by other PUSCH characteristics. For instance, it may depend on whether the PUSCH is a part of a grant configured with repetition (e.g., for some grants the PUSCH may repeat to improve reliability), whether the grant is issued for a new transmission or a re-transmission, and/or the like. In another embodiment, such indication of a grant may be implemented in an explicit indication carried by, for example, DCI or indicated in a RRC configuration message. The mapping between grant characteristics (e.g., parameters, indications, configurations, contents, and/or the like) and the UE operation (e.g., skipping) could be pre-configured.

As described above, Fig. 4 is provided as an example. Other examples are possible, according to some embodiments.

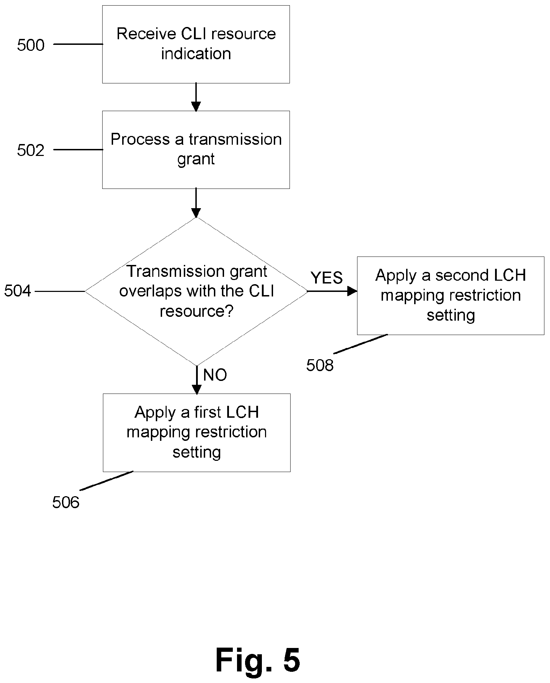

Fig. 5 illustrates an example flow diagram of narrowed LCH mapping restriction by a UE, according to some embodiments. For example, Fig. 5 illustrates an example method performed by an A-UE.

Operations 500, 502, and 504, illustrated in Fig. 5, may the same as or similar to operations 300, 302, and 304, respectively, described above. As illustrated in Fig. 5, if the A-UE determines that the transmission grant does not overlap with the CLI resource (504-NO), then the method may include, at 506, applying a first LCH mapping restriction setting. As further illustrated in Fig. 5, if the A-UE determines that the transmission grant overlaps with the CLI resource (504-YES), then the method may include, at 508, applying a second LCH mapping restriction setting. The first LCH mapping restriction setting and the second LCH mapping restriction setting may be pre-configured.

Based on LCH mapping restriction, some LCHs may be mapped to certain grants (e.g., via LCH-configured grant (LCH-CG) association, where each LCH may be configured such that its data is allowed to be mapped to resources related to a certain subset of configured grant configurations (there may be multiple configured grant configurations simultaneously)). A particular mapping operation for resources in a CLI resource may be configured for at least one LCH. In particular, the set of grants to which an LCH can be mapped may be reduced for configured grant occasions that overlap with the CLI resource.

Consider an example with 2 URLLC traffic flows on LCH1 and LCH2. By default, LCH1 may be mapped to configured grant 1 (CG1) and configured grant 2 (CG2), but in the CLI resource CG1 may be used for LCH1. By default LCH2 may be mapped to CG1 and configured grant 3 (CG3), but in the CLI resource CG1 may be used for LCH2. In this case, transmission on occasions of CG2 and CG3 may be avoided during the CLI resource to minimize interference generation, while URLLC traffic on LCH1 and LCH2 may have transmission opportunities (e.g., CG1). Thus, an A-UE may determine an LCH mapping restriction rule for a grant depending on whether the resource occasion is in the potential CLI resource.

As described above, Fig. 5 is provided as an example. Other examples are possible, according to some embodiments.

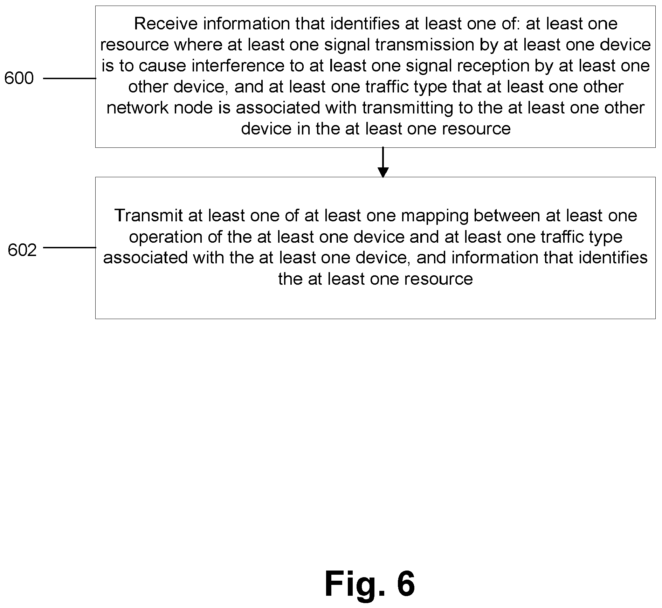

Fig. 6 illustrates an example flow diagram of a method, according to some embodiments. For example, Fig. 6 shows example operations of a network node (e.g., apparatus 10, such as an A-network node). Some of the operations illustrated in Fig. 6 may be similar to some operations shown in, and described with respect to, Figs. 1-5.

In an embodiment, the method may include, at 600, receiving information that identifies at least one of: at least one resource where at least one signal transmission by at least one device is to cause interference to at least one signal reception by at least one other device, and at least one traffic type that at least one other network node is associated with transmitting to the at least one other device in the at least one resource. In an embodiment, the method may include, at 602, transmitting at least one of at least one mapping between at least one operation of the at least one device and at least one traffic type associated with the at least one device, and information that identifies the at least one resource.

In some embodiments, the method may include determining the at least one mapping between the at least one operation of the at least one device and the at least one traffic type, wherein the at least one operation is associated with at least one transmission opportunity in the at least one resource. In some embodiments, the at least one transmission opportunity may include at least one data channel transmission opportunity, at least one control channel transmission opportunity, or at least one reference signal transmission opportunity. In some embodiments, the at least one traffic type is identified by at least one of: at least one logical channel index, at least one logical channel priority, at least one logical channel prioritization (LCP) parameter, at least one quality of service (QoS) flow identifier (QFI), at least one data radio bearer (DRB) identifier, at least one type of radio bearer, at least one quality of service (QoS) identifier, at least one quality of service (QoS)-related parameter, at least one cast-type, at least one transmission direction, or at least one buffering time or delivery time of traffic.

In some embodiments, the at least one operation may include at least one of: skipping at least one transmission opportunity in the at least one resource, using the at least one transmission opportunity with at least one set of parameters indicated in at least one grant associated with the at least one transmission opportunity, using the at least one transmission opportunity with at least one other set of parameters not indicated in the at least one grant, or modifying at least one logical channel (LCH) mapping restriction. In some embodiments, the at least one mapping may further comprise a mapping between the at least one operation and at least one grant characteristic for at least one transmission opportunity.

In some embodiments, the at least one operation may include at least one of skipping or using at least one transmission opportunity in the at least one resource. In some embodiments, the at least one operation may include at least one of skipping or using at least one transmission opportunity in the at least one resource based on at least one priority of at least one logical channel (LCH) that has data in at least one buffer. In some embodiments, the at least one operation may include skipping the at least one transmission opportunity unless the at least one priority of the at least one logical channel (LCH) that has the data satisfies at least one threshold, wherein the at least one logical channel (LCH) is mapped to the at least one transmission opportunity.

In some embodiments, the at least one operation may include at least one of skipping at least one transmission opportunity, using the at least one transmission opportunity with at least one set of parameters associated with reducing the interference, or using the at least one transmission opportunity without the at least one set of parameters. In some embodiments, the at least one operation may be based on content of a medium access control protocol data unit (MAC PDU). In some embodiments, the at least one operation may include at least one of skipping or using the at least one transmission opportunity in the at least one resource based on whether at least one priority of at least one logical channel (LCH) that has data in at least one buffer satisfies one or multiple thresholds. In some embodiments, the at least one operation includes at least one of: skipping the at least one transmission opportunity based on the at least one priority failing to satisfy a threshold and at least one other threshold, using the at least one transmission opportunity with the at least one set of parameters associated with reducing the interference based on the at least one priority satisfying the threshold and not the at least one other threshold, or using the at least one transmission opportunity without the set of parameters based on the at least one priority satisfying the threshold and one or more of the at least one other threshold.

In some embodiments, the at least one operation includes skipping or using at least one transmission opportunity on a per-transmission opportunity basis based on at least one of at least one per-transmission opportunity indication, at least one pre-configured logical channel mapping restriction, at least one value of at least one parameter associated with the at least one transmission opportunity, at least one control channel characteristic, at least one reference signal characteristic, at least one characteristic of a medium access control protocol data unit (MAC PDU), or whether at least one alternative set of parameters is configured for the at least one transmission opportunity. In some embodiments, the at least one operation may include at least one of skipping or using at least one transmission opportunity in the at least one resource based on at least one transmission opportunity-to-logical channel (LCH) mapping for the at least one resource.

As described above, Fig. 6 is provided as an example. Other examples are possible, according to some embodiments.

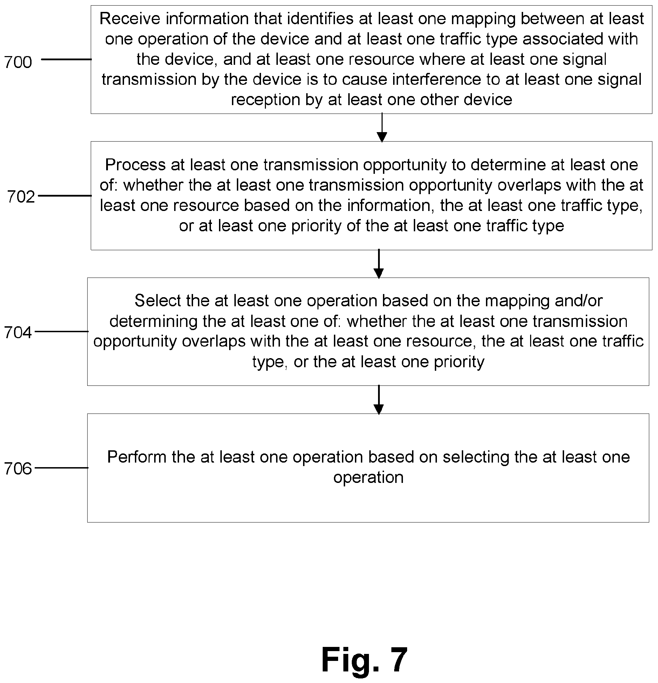

Fig. 7 illustrates an example flow diagram of a method, according to some embodiments. For example, Fig. 7 shows example operations of a UE (e.g., apparatus 20, such as an A-UE). Some of the operations illustrated in Fig. 7 may be similar to some operations shown in, and described with respect to, Figs. 1-5.

In an embodiment, the method may include, at 700, receiving information that identifies at least one mapping between at least one operation of the device and at least one traffic type associated with the device, and at least one resource where at least one signal transmission by the device is to cause interference to at least one signal reception by at least one other device. In an embodiment, the method may include, at 702, processing at least one transmission opportunity to determine at least one of: whether the at least one transmission opportunity overlaps with the at least one resource based on the information, the at least one traffic type, or at least one priority of the at least one traffic type. In an embodiment, the method may include, at 704, selecting the at least one operation based on the mapping and/or determining the at least one of: whether the at least one transmission opportunity overlaps with the at least one resource, the at least one traffic type, or the at least one priority. In an embodiment, the method may include, at 706, performing the at least one operation based on selecting the at least one operation.

In some embodiments, processing the at least one transmission opportunity may comprise determining data to be allocated to the at least one resource, and delivering the data to at least one physical layer for transmission. In some embodiments, performing the at least one operation may comprise using the at least one transmission opportunity based on determining that the at least one transmission opportunity is not in the at least one resource. In some embodiments, performing the at least one operation may comprise using the at least one transmission opportunity according to the at least one operation based on the at least one mapping and based on the at least one transmission opportunity being in the at least one resource.

In some embodiments, the at least one transmission opportunity includes at least one data channel transmission opportunity, at least one control channel transmission opportunity, or at least one reference signal transmission opportunity. In some embodiments, the at least one traffic type is identified by at least one of at least one logical channel index, at least one logical channel priority, at least one logical channel prioritization (LCP) parameter, at least one quality of service (QoS) flow identifier (QFI), at least one data radio bearer (DRB) identifier, at least one type of radio bearer, at least one quality of service (QoS) identifier, at least one quality of service (QoS)-related parameter, at least one cast-type, at least one transmission direction, or at least one buffering time or delivery time of traffic.

In some embodiments, performing the at least one operation may comprise at least one of skipping at least one transmission opportunity in the at least one resource, using the at least one transmission opportunity with at least one set of parameters indicated in at least one grant associated with the at least one transmission opportunity, using the at least one transmission opportunity at least one other set of parameters not indicated in the at least one grant, or modifying at least one logical channel (LCH) mapping restriction. In some embodiments, the at least one mapping may further comprise a mapping between the at least one operation and at least one grant characteristic for at least one transmission opportunity.

In some embodiments, performing the at least one operation may comprise at least one of skipping or using at least one transmission opportunity in the at least one resource. In some embodiments, performing the at least one operation may comprise at least one of skipping or using at least one transmission opportunity in the at least one resource based on at least one priority of a logical channel (LCH) that has data in at least one buffer. In some embodiments, performing the at least one operation may comprise at least one of skipping the at least one transmission opportunity unless the at least one priority of the logical channel (LCH) that has the data satisfies at least one threshold, wherein the at least one logical channel (LCH) is mapped to the at least one transmission opportunity.

In some embodiments, performing the at least one operation may comprise at least one of skipping at least one transmission opportunity, using the at least one transmission opportunity with at least one set of parameters associated with reducing the interference, or using the at least one transmission opportunity without the at least one set of parameters. In some embodiments, the at least one operation may be based on content of a medium access control protocol data unit (MAC PDU). In some embodiments, performing the at least one operation may comprise at least one of skipping or using at least one transmission opportunity in the at least one resource based on whether at least one priority of a logical channel (LCH) that has data in at least one buffer satisfies one or multiple thresholds. In some embodiments, performing the at least one operation may comprise at least one of: skipping the at least one transmission opportunity based on the at least one priority of the logical channel (LCH) failing to satisfy a threshold and at least one other threshold, using the at least one transmission opportunity with the set of parameters associated with reducing the interference based on the at least one priority satisfying the threshold and not the at least one other threshold, and using the at least one transmission opportunity without the at least one set of parameters based on the at least one priority of the logical channel (LCH) satisfying the threshold and one or more of the at least one other threshold.

In some embodiments, performing the at least one operation may comprise skipping or using at least one transmission opportunity on a per-transmission opportunity basis based on at least one of: at least one per-transmission opportunity indication, at least one pre-configured logical channel mapping restriction, at least one value of a parameter associated with the at least one transmission opportunity, at least one control channel characteristic, at least one reference signal characteristic, at least one characteristic of a medium access control protocol data unit (MAC PDU), or whether at least one alternative set of parameters is configured for the at least one transmission opportunity. In some embodiments, performing the at least one operation may comprise at least one of skipping or using at least one transmission opportunity in the at least one resource based on at least one transmission opportunity-to-logical channel (LCH) mapping for the at least one resource.

As described above, Fig. 7 is provided as an example. Other examples are possible according to some embodiments.

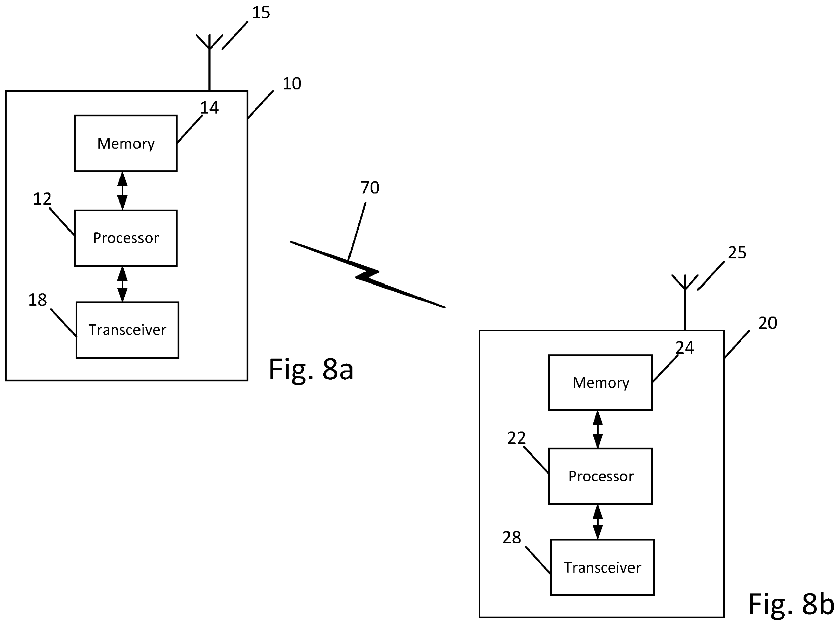

Fig. 8a illustrates an example of an apparatus 10 according to an embodiment. In an embodiment, apparatus 10 may be a node, host, or server in a communications network or serving such a network. For example, apparatus 10 may be a network node (e.g., an A-network node described herein), satellite, base station, a Node B, an evolved Node B (eNB), 5G Node B or access point, next generation Node B (NG-NB or gNB), and/or a WLAN access point, associated with a radio access network, such as a LTE network, 5G or NR. In example embodiments, apparatus 10 may be an eNB in LTE or gNB in 5G.

It should be understood that, in some example embodiments, apparatus 10 may be comprised of an edge cloud server as a distributed computing system where the server and the radio node may be stand-alone apparatuses communicating with each other via a radio path or via a wired connection, or they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a front-haul interface. The DU may be a logical node that includes a subset of the gNB functions, depending on the functional split option. It should be noted that one of ordinary skill in the art would understand that apparatus 10 may include components or features not shown in Fig. 8a.

As illustrated in the example of Fig. 8a, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in Fig. 8a, multiple processors may be utilized according to other embodiments. For example, it should be understood that, in certain embodiments, apparatus 10 may include two or more processors that may form a multiprocessor system (e.g., in this case processor 12 may represent a multiprocessor) that may support multiprocessing. In certain embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to management of communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein. In some embodiments, memory 14 may be used to implement one or more buffers described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink).

As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device).

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry or control circuitry. In addition, in some embodiments, transceiver 18 may be included in or may form a part of transceiver circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to case an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be a network node or RAN node, such as a base station, access point, Node B, eNB, gNB, WLAN access point, or the like.

According to certain embodiments, apparatus 10 may be controlled by memory 14 and processor 12 to perform the functions associated with any of the embodiments described herein, such as some operations of flow or signaling diagrams illustrated in Figs. 1-6.

For instance, in one embodiment, apparatus 10 may be controlled by memory 14 and processor 12 to receive information that identifies at least one of at least one resource where at least one signal transmission by at least one device is to cause interference to at least one signal reception by at least one other device, and at least one traffic type that at least one other network node is associated with transmitting to the at least one other device in the at least one resource. In an embodiment, apparatus 10 may be controlled by memory 14 and processor 12 to transmit at least one of: at least one mapping between at least one operation of the at least one device and at least one traffic type associated with the at least one device, and information that identifies the at least one resource.

Fig. 8b illustrates an example of an apparatus 20 according to another embodiment. In an embodiment, apparatus 20 may be a node or element in a communications network or associated with such a network, such as a UE (e.g., an A-UE), mobile equipment (ME), mobile station, mobile device, stationary device, IoT device, or other device. As described herein, a UE may alternatively be referred to as, for example, a mobile station, mobile equipment, mobile unit, mobile device, user device, subscriber station, wireless terminal, tablet, smart phone, IoT device, sensor or NB-IoT device, or the like. As one example, apparatus 20 may be implemented in, for instance, a wireless handheld device, a wireless plug-in accessory, or the like.

In some example embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in Fig. 8b.

As illustrated in the example of Fig. 8b, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in Fig. 8b, multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein. In some embodiments, memory 24 may be used to implement one or more buffers described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 20 may include an input and/or output device (I/O device). In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 via a wireless or wired communications link 70 according to any radio access technology, such as NR.

According to some embodiments, processor 22 and memory 24 may be included in or may form a part of processing circuitry or control circuitry. In addition, in some embodiments, transceiver 28 may be included in or may form a part of transceiving circuitry.

As discussed above, according to some embodiments, apparatus 20 may be a UE, mobile device, mobile station, ME, IoT device and/or NB-IoT device, for example. According to certain embodiments, apparatus 20 may be controlled by memory 24 and processor 22 to perform the functions associated with example embodiments described herein. For example, in some embodiments, apparatus 20 may be configured to perform one or more of the processes depicted in any of the flow charts or signaling diagrams described herein, such as those illustrated in Figs. 1-5 and 7.

For instance, in one embodiment, apparatus 20 may be controlled by memory 24 and processor 22 to receive information that identifies at least one mapping between at least one operation of the device and at least one traffic type associated with the device, and at least one resource where at least one signal transmission by the device that is to cause interference to at least one signal reception by at least one other apparatus. In an embodiment, apparatus 20 may be controlled by memory 24 and processor 22 to process at least one transmission opportunity to determine at least one of: whether the at least one transmission opportunity overlaps with the at least one resource based on the information, the at least one traffic type, or at least one priority of the at least one traffic type. In an embodiment, apparatus 20 may be controlled by memory 24 and processor 22 to select the at least one operation based on the mapping and/or determining the at least one of: whether the at least one transmission opportunity overlaps with the at least one resource, the at least one traffic type, or at least one priority associated with the at least one traffic type. In an embodiment, apparatus 20 may be controlled by memory 24 and processor 22 to perform the at least one operation based on selecting the at least one operation.

Therefore, certain example embodiments provide several technological improvements, enhancements, and/or advantages over existing technological processes. For example, one benefit of some example embodiments is improved communications when a signal transmission from one device overlaps in a resource with a signal reception of another device. Accordingly, the use of some example embodiments results in improved functioning of communications networks and their nodes and, therefore constitute an improvement at least to the technological field of network communications, among others.

In some example embodiments, the functionality of any of the methods, processes, signaling diagrams, algorithms or flow charts described herein may be implemented by software and/or computer program code or portions of code stored in memory or other computer readable or tangible media, and executed by a processor.

In some example embodiments, an apparatus may be included or be associated with at least one software application, module, unit or entity configured as arithmetic operation(s), or as a program or portions of it (including an added or updated software routine), executed by at least one operation processor. Programs, also called program products or computer programs, including software routines, applets and macros, may be stored in any apparatus-readable data storage medium and may include program instructions to perform particular tasks.

A computer program product may include one or more computer-executable components which, when the program is run, are configured to carry out some example embodiments. The one or more computer-executable components may be at least one software code or portions of code. Modifications and configurations required for implementing functionality of an example embodiment may be performed as routine(s), which may be implemented as added or updated software routine(s). In one example, software routine(s) may be downloaded into the apparatus.

As an example, software or a computer program code or portions of code may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, such as a non-tangible means that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

Example embodiments described herein apply equally to both singular and plural implementations, regardless of whether singular or plural language is used in connection with describing certain embodiments. For example, an embodiment that describes operations of a single network node equally applies to embodiments that include multiple instances of the network node, and vice versa.

One having ordinary skill in the art will readily understand that the example embodiments as discussed above may be practiced with operations in a different order, and/or with hardware elements in configurations which are different than those which are disclosed. Therefore, although some embodiments have been described based upon these example preferred embodiments, it would be apparent to those of skill in the art that certain modifications, variations, and alternative constructions would be apparent, while remaining within the spirit and scope of example embodiments.

According to a first embodiment, a method may include receiving information that identifies at least one of: at least one resource where at least one signal transmission by at least one device is to cause interference to at least one signal reception by at least one other device, and at least one traffic type that at least one other network node is associated with transmitting to the at least one other device in the at least one resource. The method may include transmitting at least one of at least one mapping between at least one operation of the at least one device and at least one traffic type associated with the at least one device, and information that identifies the at least one resource.

In a variant, the method may include determining the at least one mapping between the at least one operation of the at least one device and the at least one traffic type, wherein the at least one operation is associated with at least one transmission opportunity in the at least one resource. In a variant, the at least one transmission opportunity may include at least one data channel transmission opportunity, at least one control channel transmission opportunity, or at least one reference signal transmission opportunity. In a variant, the at least one traffic type is identified by at least one of: at least one logical channel index, at least one logical channel priority, at least one logical channel prioritization (LCP) parameter, at least one quality of service (QoS) flow identifier (QFI), at least one data radio bearer (DRB) identifier, at least one type of radio bearer, at least one quality of service (QoS) identifier, at least one quality of service (QoS)-related parameter, at least one cast-type, at least one transmission direction, or at least one buffering time or delivery time of traffic.

In a variant, the at least one operation may include at least one of: skipping at least one transmission opportunity in the at least one resource, using the at least one transmission opportunity with at least one set of parameters indicated in at least one grant associated with the at least one transmission opportunity, using the at least one transmission opportunity with at least one other set of parameters not indicated in the at least one grant, or modifying at least one logical channel (LCH) mapping restriction. In a variant, the at least one mapping may further comprise a mapping between the at least one operation and at least one grant characteristic for at least one transmission opportunity.

In a variant, the at least one operation may include at least one of skipping or using at least one transmission opportunity in the at least one resource. In a variant, the at least one operation may include at least one of skipping or using at least one transmission opportunity in the at least one resource based on at least one priority of at least one logical channel (LCH) that has data in at least one buffer. In a variant, the at least one operation may include skipping the at least one transmission opportunity unless the at least one priority of the at least one logical channel (LCH) that has the data satisfies at least one threshold, wherein the at least one logical channel (LCH) is mapped to the at least one transmission opportunity.

In a variant, the at least one operation may include at least one of skipping at least one transmission opportunity, using the at least one transmission opportunity with at least one set of parameters associated with reducing the interference, or using the at least one transmission opportunity without the at least one set of parameters. In a variant, the at least one operation may be based on content of a medium access control protocol data unit (MAC PDU). In a variant, the at least one operation may include at least one of skipping or using the at least one transmission opportunity in the at least one resource based on whether at least one priority of at least one logical channel (LCH) that has data in at least one buffer satisfies one or multiple thresholds. In a variant, the at least one operation includes at least one of: skipping the at least one transmission opportunity based on the at least one priority failing to satisfy a threshold and at least one other threshold, using the at least one transmission opportunity with the at least one set of parameters associated with reducing the interference based on the at least one priority satisfying the threshold and not the at least one other threshold, or using the at least one transmission opportunity without the set of parameters based on the at least one priority satisfying the threshold and the at least one other threshold.

In a variant, the at least one operation includes skipping or using at least one transmission opportunity on a per-transmission opportunity basis based on at least one of at least one per-transmission opportunity indication, at least one pre-configured logical channel mapping restriction, at least one value of at least one parameter associated with the at least one transmission opportunity, at least one control channel characteristic, at least one reference signal characteristic, at least one characteristic of a medium access control protocol data unit (MAC PDU), or whether at least one alternative set of parameters is configured for the at least one transmission opportunity. In a variant, the at least one operation may include at least one of skipping or using at least one transmission opportunity in the at least one resource based on at least one transmission opportunity-to-logical channel (LCH) mapping for the at least one resource.

According to a second embodiment, a method may include receiving information that identifies at least one mapping between at least one operation of the device and at least one traffic type associated with the device, and at least one resource where at least one signal transmission by the device that is to cause interference to at least one signal reception by at least one other apparatus. The method may include processing at least one transmission opportunity to determine at least one of: whether the at least one transmission opportunity overlaps with the at least one resource based on the information, the at least one traffic type, or at least one priority of the at least one traffic type. The method may further include selecting the at least one operation based on the mapping and/or determining the at least one of: whether the at least one transmission opportunity overlaps with the at least one resource, the at least one traffic type, or the at least one priority associated with the at least one traffic type. The method may include performing the at least one operation based on selecting the at least one operation.

In a variant, processing the at least one transmission opportunity may comprise determining data to be allocated to the at least one resource, and delivering the data to at least one physical layer for transmission. In a variant, performing the at least one operation may comprise using the at least one transmission opportunity based on determining that the at least one transmission opportunity is not in the at least one resource. In a variant, performing the at least one operation may comprise using the at least one transmission opportunity according to the at least one operation based on the at least one mapping and based on the at least one transmission opportunity being in the at least one resource.

In a variant, the at least one transmission opportunity includes at least one data channel transmission opportunity, at least one control channel transmission opportunity, or at least one reference signal transmission opportunity. In a variant, the at least one traffic type is identified by at least one of at least one logical channel index, at least one logical channel priority, at least one logical channel prioritization (LCP) parameter, at least one quality of service (QoS) flow identifier (QFI), at least one data radio bearer (DRB) identifier, at least one type of radio bearer, at least one quality of service (QoS) identifier, at least one quality of service (QoS)-related parameter, at least one cast-type, at least one transmission direction, or at least one buffering time or delivery time of traffic.

In a variant, performing the at least one operation may comprise at least one of skipping at least one transmission opportunity in the at least one resource, using the at least one transmission opportunity with at least one set of parameters indicated in at least one grant associated with the at least one transmission opportunity, using the at least one transmission opportunity at least one other set of parameters not indicated in the at least one grant, or modifying at least one logical channel (LCH) mapping restriction. In a variant, the at least one mapping may further comprise a mapping between the at least one operation and at least one grant characteristic for at least one transmission opportunity.

In a variant, performing the at least one operation may comprise at least one of skipping or using at least one transmission opportunity in the at least one resource. In a variant, performing the at least one operation may comprise at least one of skipping or using at least one transmission opportunity in the at least one resource based on at least one priority of a logical channel (LCH) that has data in at least one buffer. In a variant, performing the at least one operation may comprise at least one of skipping the at least one transmission opportunity unless the at least one priority of the logical channel (LCH) that has the data satisfies at least one threshold, wherein the at least one logical channel (LCH) is mapped to the at least one transmission opportunity.

In a variant, performing the at least one operation may comprise at least one of skipping at least one transmission opportunity, using the at least one transmission opportunity with at least one set of parameters associated with reducing the interference, or using the at least one transmission opportunity without the at least one set of parameters. In a variant, the at least one operation may be based on content of a medium access control protocol data unit (MAC PDU). In a variant, performing the at least one operation may comprise at least one of skipping or using at least one transmission opportunity in the at least one resource based on whether at least one priority of a logical channel (LCH) that has data in at least one buffer satisfies one or multiple thresholds. In a variant, performing the at least one operation may comprise at least one of: skipping the at least one transmission opportunity based on the at least one priority of the logical channel (LCH) failing to satisfy a threshold and at least one other threshold, using the at least one transmission opportunity with the set of parameters associated with reducing the interference based on the at least one priority of the logical channel (LCH) satisfying the threshold and not the at least one other threshold, and using the at least one transmission opportunity without the at least one set of parameters based on the at least one priority of the logical channel (LCH) satisfying the threshold and one or more of the at least one other threshold.

In a variant, performing the at least one operation may comprise skipping or using at least one transmission opportunity on a per-transmission opportunity basis based on at least one of: at least one per-transmission opportunity indication, at least one pre-configured logical channel mapping restriction, at least one value of a parameter associated with the at least one transmission opportunity, at least one control channel characteristic, at least one reference signal characteristic, at least one characteristic of a medium access control protocol data unit (MAC PDU), or whether at least one alternative set of parameters is configured for the at least one transmission opportunity. In a variant, performing the at least one operation may comprise at least one of skipping or using at least one transmission opportunity in the at least one resource based on at least one transmission opportunity-to-logical channel (LCH) mapping for the at least one resource.

An third embodiment may be directed to an apparatus including at least one processor and at least one memory comprising computer program code. The at least one memory and computer program code may be configured, with the at least one processor, to cause the apparatus at least to perform the method according to the first embodiment or the second embodiment, or the tenth embodiment, or any of the variants discussed above.

A fourth embodiment may be directed to an apparatus that may include circuitry configured to perform the method according to the first embodiment or the second embodiment, or the tenth embodiment, or any of the variants discussed above.

A fifth embodiment may be directed to an apparatus that may include means for performing the method according to the first embodiment or the second embodiment, or any of the variants discussed above.

A sixth embodiment may be directed to a computer readable medium comprising program instructions stored thereon for performing at least the method according to the first embodiment or the second embodiment, or any of the variants discussed above.

An seventh embodiment may be directed to a computer program product encoding instructions for performing at least the method according to the first embodiment or the second embodiment, or any of the variants discussed above.

### PARTIAL GLOSSARY

5QI: 5G QoS Indicator
A-gNB: Aggressor gNB
A-UE: Aggressor UE
BSD: Bucket Size Duration
CAPC: Channel Access Priority Class
CE: Control Elements
CLI: Cross-Link Interference
CG: Configured Grant
CSI: Channel State Information
CU: Centralized Unit
DCI: Downlink Control Information
DL: Downlink Link
DMRS: Demodulation Reference Signals
DRB: Data Radio Bearer
DU: Distributed Unit
gNB: 5G Node B
HARQ: Hybrid ARQ
IIoT: Industrial Internet of Things
LCH: Logical Channel
LCP: Logical Channel Prioritization
MAC: Medium Access Control
MCS: Modulation/Coding Scheme
MIMO: Multiple-Input Multiple-Output
Msg A: Message A
NR: New Radio
OFDM: Orthogonal Frequency Division Multiplexing
PBR: Prioritized Bit Rate
PDB: Packet Delay Budget
PDSCH: Physical Downlink Shared Channel
PDU: Protocol Data Unit
PQI: PC5 QoS Identifier
PRACH: Physical Random Access Channel
PRB: Physical Resource Block
PUCCH: Physical Uplink Control Channel
PUSCH: Physical Uplink Shared Channel
QoS: Quality of Service
RACH: Random Access Channel
RAN: Radio Access Networks
RRC: Radio Resource Control
RSRP: Reference Signal Received Power
SPS: Semi-Persistent Scheduling
SR: Scheduling Request
SRB: Signalling Radio Bearer
SRS: Sounding Reference Signals
TB: Transport Block
TDD: Time Division Duplex
TRP: Transmit/Receive Point
TSC: Time-Sensitive Communications
TSCAI: Time-Sensitive Communications Assistance Information
TTI: Transmission Time Intervals
TX: Transmission
UCI: Uplink Control Information
UE: User Equipment
UL: Uplink
URLLC: Ultra-Reliable Low-Latency Communications
V-gNB: Victim gNB
V-UE: Victim UE

## Claims

1. An apparatus, comprising:
means for receiving information that identifies:
at least one mapping between at least one operation of the apparatus and at least one traffic type associated with the apparatus, and
at least one resource where at least one signal transmission by the apparatus is to cause interference to at least one signal reception by at least one other device;
means for processing at least one transmission opportunity to determine at least one of: whether the at least one transmission opportunity overlaps with the at least one resource based on the information, the at least one traffic type, or at least one priority of the at least one traffic type; and
means for selecting the at least one operation based on the mapping and the determining.

2. The apparatus according to claim 1, wherein the at least one operation comprises:
using the at least one transmission opportunity based on determining that the at least one transmission opportunity does not overlap with the at least one resource.

3. The apparatus according to claim 1 or 2, wherein the at least one operation comprises:
using the at least one transmission opportunity according to the at least one operation based on the at least one mapping and based on the at least one transmission opportunity overlapping with the at least one resource.

4. The apparatus according to any of claims 1-3, wherein the at least one traffic type is identified by at least one of:
at least one logical channel index,
at least one logical channel priority,
at least one logical channel prioritization parameter,
at least one quality of service flow identifier,
at least one data radio bearer identifier,
at least one type of radio bearer,
at least one quality of service identifier,
at least one quality of service -related parameter,
at least one cast-type,
at least one transmission direction, or
at least one buffering time or delivery time of traffic.

5. The apparatus according to any of claims 1-4, wherein the at least one operation comprises at least one of:
skipping at least one transmission opportunity in the at least one resource,
using the at least one transmission opportunity with at least one set of parameters indicated in at least one grant associated with the at least one transmission opportunity,
using the at least one transmission opportunity with at least one other set of parameters not indicated in the at least one grant, or
modifying at least one logical channel mapping restriction.

6. The apparatus according to any of claims 1-5, wherein the at least one mapping further comprises a mapping between the at least one operation and at least one grant characteristic for the at least one transmission opportunity.

7. The apparatus according to any of claims 1-6, wherein the at least one operation comprises at least one of skipping or using the at least one transmission opportunity in the at least one resource.

8. The apparatus according to claim 7, wherein the at least one operation comprises at least one of skipping or using the at least one transmission opportunity in the at least one resource based on at least one priority of a logical channel that has data in at least one buffer.

9. The apparatus according to claim 8, wherein the at least one operation comprises at least one of skipping the at least one transmission opportunity unless the at least one priority of the logical channel that has the data satisfies at least one threshold, wherein the at least one logical channel is mapped to the at least one transmission opportunity.

10. The apparatus according to any of claims 1-6, wherein the at least one operation comprises at least one of skipping the at least one transmission opportunity, using the at least one transmission opportunity with at least one set of parameters associated with reducing the interference, or using the at least one transmission opportunity without the at least one set of parameters.

11. The apparatus according to claim 10, wherein the at least one operation comprises at least one of skipping or using the at least one transmission opportunity in the at least one resource based on whether at least one priority of a logical channel that has data in at least one buffer satisfies one or multiple thresholds.

12. The apparatus according to claim 11, wherein the at least one operation comprises at least one of:
skipping the at least one transmission opportunity based on the at least one priority of the logical channel failing to satisfy a threshold and at least one other threshold,
using the at least one transmission opportunity with the set of parameters associated with reducing the interference based on the at least one priority of the logical channel satisfying the threshold and not the at least one other threshold, and
using the at least one transmission opportunity without the at least one set of parameters based on the at least one priority of the logical channel satisfying the threshold and one or more of the at least one other threshold.

13. The apparatus according to any of claims 1-12, wherein the at least one operation comprises skipping or using the at least one transmission opportunity on a per-transmission opportunity basis based on at least one of:
at least one per-transmission opportunity indication,
at least one pre-configured logical channel mapping restriction,
at least one value of a parameter associated with the at least one transmission opportunity,
at least one control channel characteristic,
at least one reference signal characteristic,
at least one characteristic of a medium access control protocol data unit, or whether at least one alternative set of parameters is configured for the at least one transmission opportunity.

14. A method, comprising:
receiving, by a device, information that identifies:
at least one mapping between at least one operation of the device and at least one traffic type associated with the device, and
at least one resource where at least one signal transmission by the device is to cause interference to at least one signal reception by at least one other device;
processing, by the device, at least one transmission opportunity to determine at least one of: whether the at least one transmission opportunity overlaps with the at least one resource based on the information, the at least one traffic type, or at least one priority of the at least one traffic type; and
selecting, by the device, the at least one operation based on the mapping and the determining.

15. An apparatus, comprising:
means for receiving information that identifies at least one of:
at least one resource where a signal transmission by at least one device is to cause interference to at least one signal reception by at least one other device, and
at least one traffic type that at least one other apparatus transmits to the at least one other device in the at least one resource; and
means for transmitting at least one of:
at least one mapping between at least one operation of the at least one device and at least one traffic type associated with the at least one device, and information that identifies the at least one resource.
